# EUROPEAN PATENT APPLICATION

(11) **EP 3 650 201 A1**
(43) Date of publication of application: **13.05.2020**
(21) Application number: 19174305.3
(22) Date of filing: 14.05.2019
(51) Int. Cl.: B29C 64/118, B29C 64/245, B33Y 30/00, B33Y 40/00

(54) **3D PRINTING DEVICE**

(30) Priority: 12.11.2018 TW 107140084
(71) Applicant: XYZprinting, Inc., New Taipei City 22201 (TW); Kinpo Electronics, Inc., New Taipei City 22201 (TW)
(72) Inventor: LEE, Yang-Teh, 22201 New Taipei City (TW); HSIEH, Yi-Chu, 22201 New Taipei City (TW)
(74) Representative: 2K Patentanwälte Blasberg Kewitz & Reichel

(57) **Abstract**

A 3D printing device having a casing (100), a lifting platform (300), a horizontal sliding rail (400) and a forming platform (500) is provided. A forming chamber (101) is defined in the casing (100), and an opening (102) communicated with the forming chamber (101) is defined at one side of the casing (100). The lifting platform (300) is accommodated in the casing (100). The horizontal sliding rail (400) is disposed on the lifting platform (300), and the horizontal sliding rail (400) extends toward the opening (102). The forming platform (500) is disposed on the horizontal sliding rail (400) and movable along the horizontal sliding rail (400). The forming platform (500) is capable of moving out of the casing (100) through the opening (102).

## Description

### BACKGROUND OF THE INVENTION

### Technical Field

The present disclosure is related to a 3D printing device, and more particular to a 3D printing device having a forming platform which is capable of retreating therefrom.

### Description of Related Art

The 3D printing device of the present disclosure is related to a forming method of fused deposition modeling (FDM). According to the forming method, a heat meltable filamentous material is pre-heated to be melted. The melted material is extruded onto a forming platform by a nozzle according to a layer profile of a predetermined 3D model data and the extruded melted material is further solidified to form a layer. A distance between the forming platform and the nozzle could be further modified, and another layer is thereby allowed to be formed on the existing layer. A three-dimensional model could be formed by multiple layers arranged in a stack.

A conventional FDM printing device includes a casing, and a forming platform, a nozzle and rails are arranged in the casing. The printed model could be moved out from the casing through an opening thereon. However, it is inconvenient to detach a large model.

In views of this, in order to solve the above disadvantage, the present inventor studied related technology and provided a reasonable and effective solution in the present disclosure.

### SUMMARY OF THE INVENTION

A 3D printing device having a forming platform which is capable of retreating therefrom is provided in the present disclosure.

According to an embodiment of the present disclosure, the 3D printing device has a casing, a lifting platform accommodated in the casing, a horizontal sliding rail arranged on the lifting platform, and a forming platform arranged on the horizontal sliding rail is provided. A forming chamber is defined in the casing, an opening communicated with the forming chamber being defined on a side of the casing. The horizontal sliding rail is upward extended toward the opening. The forming platform is horizontally movable along the horizontal sliding rail, and capable of moving out of the casing through the opening.

According to the embodiment of the present disclosure, a bracket is arranged on a bottom surface of the forming platform, when the forming platform is moved out of the casing, the bracket is located outside the casing to support the forming platform. One end of the bracket is pivotally connected to the bottom surface of the forming platform and capable of being folded onto the bottom surface of the forming platform. The bracket is a combined structure of serial connected multiple segments, and a length of the bracket is thereby adjustable according to a point supported by the bracket. A wheel is arranged on one end of the bracket for ratable contacting. A groove for containing the bracket is defined on the bottom surface of the forming platform. The forming platform is penetrated by a locking pin, when the bracket is expanded, the forming platform and the bracket is penetrated by the locking pin and the bracket is thereby positioned at an expanded position. A magnetic member is arranged on the bracket, when the bracket is folded to the forming platform, the magnetic member magnetically attaches the forming platform and the bracket is thereby positioned at a folded position.

According to the embodiment of the present disclosure, a vertical rail is arranged in the casing, the lifting platform is arranged on the vertical rail and up-down movable along the vertical rail. When the lifting platform is located at a lower end of the vertical rail, the forming platform is aligned to an area enclosed by the opening.

According to the embodiment of the present disclosure, the 3D printing device further includes a fixing assembly and a position latch, the fixing assembly is arranged on the lifting platform, the fixing assembly is arranged corresponding to an end of the horizontal sliding rail far from the opening and the forming platform is pressed thereby toward the opening, the position latch is arranged on the lifting platform, the position latch latches the forming platform and prevents the forming platform from moving toward the opening. The fixing assembly comprises a pushing rod pressing on the forming platform and an elastic member driving the pushing rod. The position latch is pivoted on the lifting platform, and a reset spring is arranged on the position latch for driving the position latch to pivot and further latch the forming platform.

According to the embodiment of the present disclosure, a horizontal sliding rail is arranged on the lifting platform, and the forming platform is thereby laterally moveable along the horizontal sliding rail and could be moved out of the casing through the opening.

### BRIEF DESCRIPTION OF DRAWING

The present disclosure can be more fully understood by reading the following detailed description of the embodiment, with reference made to the accompanying drawings as follows:
Figs. 1 and 2 are perspective views showing a 3D printing device according to an embodiment of the present disclosure.
Figs. 3 to 5 are perspective views showing parts of the 3D printing device according to the embodiment of the present disclosure.
Fig. 6 is an enlarged view showing an area 6 in Fig. 4.
Fig. 7 is an enlarged view showing an area 7 in Fig. 5.
Fig. 8 is a schematic view showing that a forming platform is released from a position latch of the 3D printing device according to the embodiment of the present disclosure.
Figs. 9 to 11 are perspective views showing that the forming platform is moved out of a casing of the 3D printing device according to the embodiment of the present disclosure.

### DESCRIPTION OF THE PREFERRED EMBODIMENTS

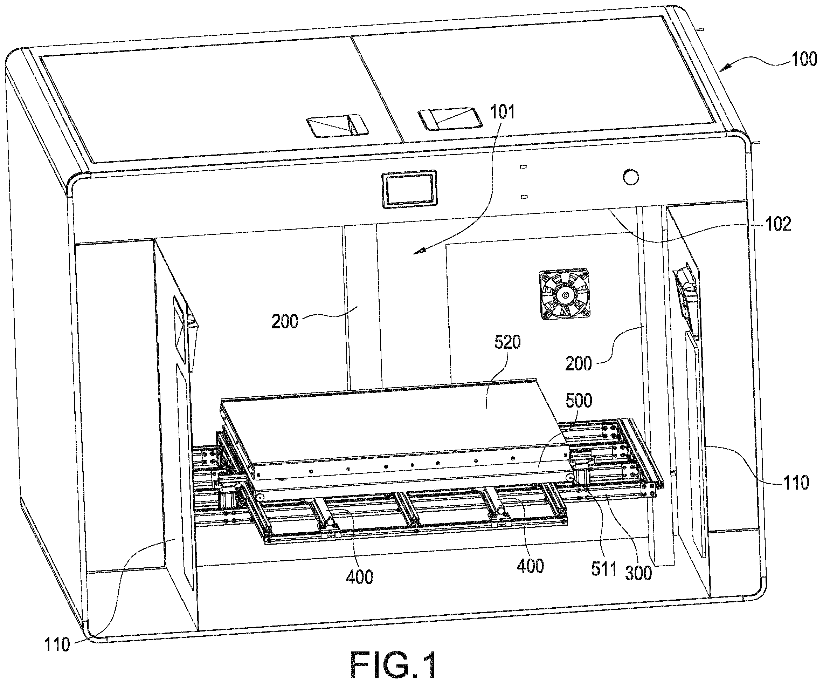

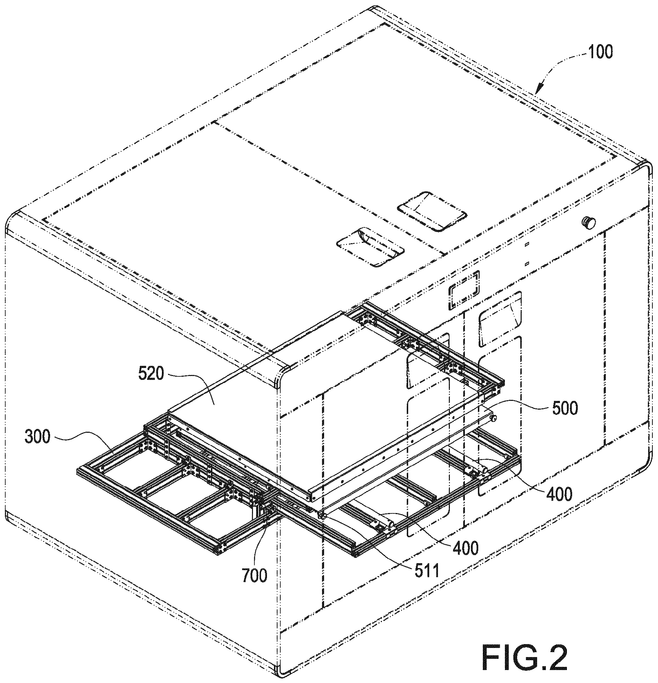

According to Figs. 1 and 2, a 3D printing device is provided in an embodiment of the present disclosure. According to the present embodiment, the 3D printing device of the present disclosure preferably has a casing 100, at least one vertical rail 200, a lifting platform 300, at least one horizontal sliding rail 400, a forming platform 500, at least one fixing assembly 600 and at least one position latch 700.

According to the present embodiment, the casing 100 is preferably a rectangular box, however, the shape of the casing 100 should not be limited to the embodiment. A forming chamber 101 is enclosed in the casing 100, an opening 102 is defined on a side of the casing 100, the opening 102 is communicated with the forming chamber 101, and door leaves 110 could be arranged on the opening 102. The opening 102 could be closed by the door leaves 110 when the 3D printing device is operated.

The vertical rail 200 is upright arranged in the casing 100, the 3D printing device according to the present embodiment is applied to print large models, and three identical vertical rails 200 are therefore preferably arranged in the casing 100. The three vertical rails 200 are respectively arranged corresponding to other three sides without opening 102 of the casing 100. The aforementioned arrangement is a preferable arrangement of the vertical rail 200, however, the number and location in the casing 100 of the vertical rail 200 should not be limited to the embodiment.

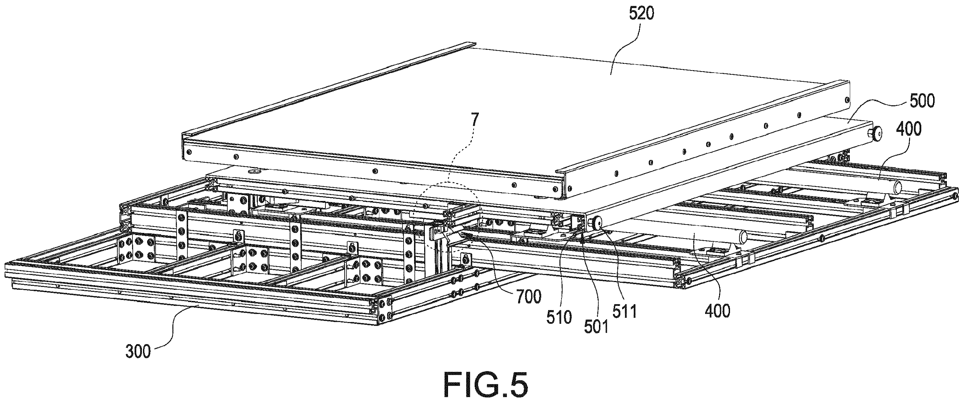

According to Figs. 1 to 5, the lifting platform 300 is accommodated in the casing 100, and the lifting platform 300 is arranged on the vertical rail 200. Specifically, the lifting platform 300 is connected to the aforementioned respective vertical rails 200, and the lifting platform 300 is thereby up-down movable along the vertical rail 200 in the forming chamber 101 for a 3D printing operation.

The horizontal sliding rail 400 is arranged on the lifting platform 300, and the horizontal sliding rail 400 is extended toward the opening 102. According to the present embodiment, a couple of horizontal sliding rails 400 are structurally and functionally identical and arranged on the lifting platform 300, and the respective horizontal sliding rails 400 are preferably rods. The aforementioned arrangement is a preferably arrangement of the horizontal sliding rail 400, however, the number and type of the horizontal sliding rail 400 should not be limited to the embodiment.

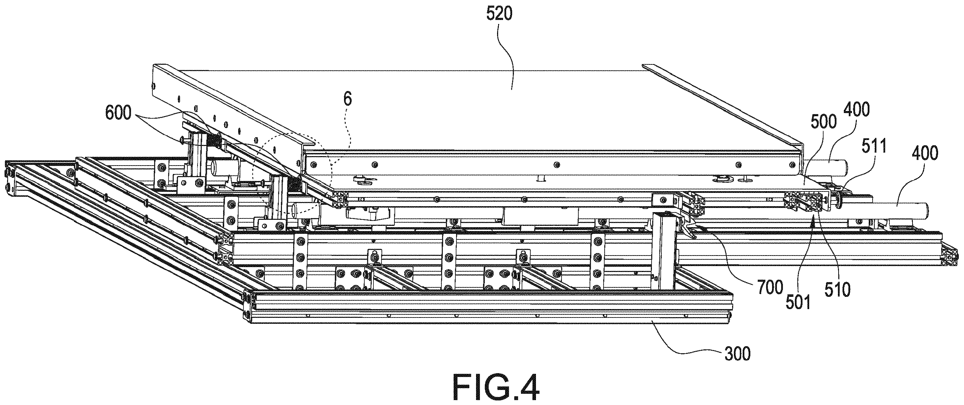

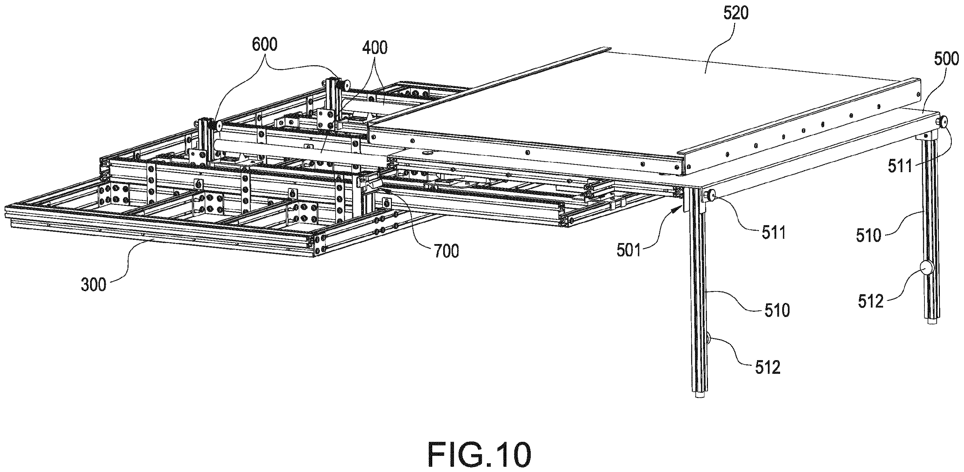

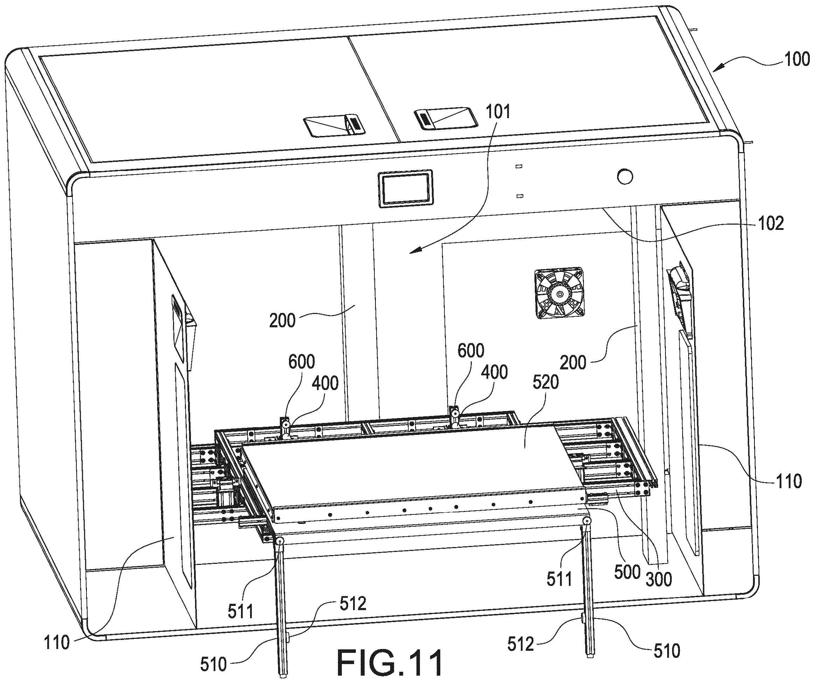

According to Figs. 4 to 5 and 9 to 11, the forming platform 500 is arranged on the horizontal sliding rail 400 and laterally movable along the horizontal sliding rail 400 related to the opening 102. When the lifting platform 300 is located at a bottom end of the vertical rail 200, the forming platform 500 is located align to an area enclosed by the opening 102, and the forming platform 500 is therefore capable of moving out of the casing 100 through the opening 102 along the horizontal sliding rail 400. The forming platform 500 has a detachable carrying plate 520, and a printed model is allowed to be formed on the carrying plate 520.

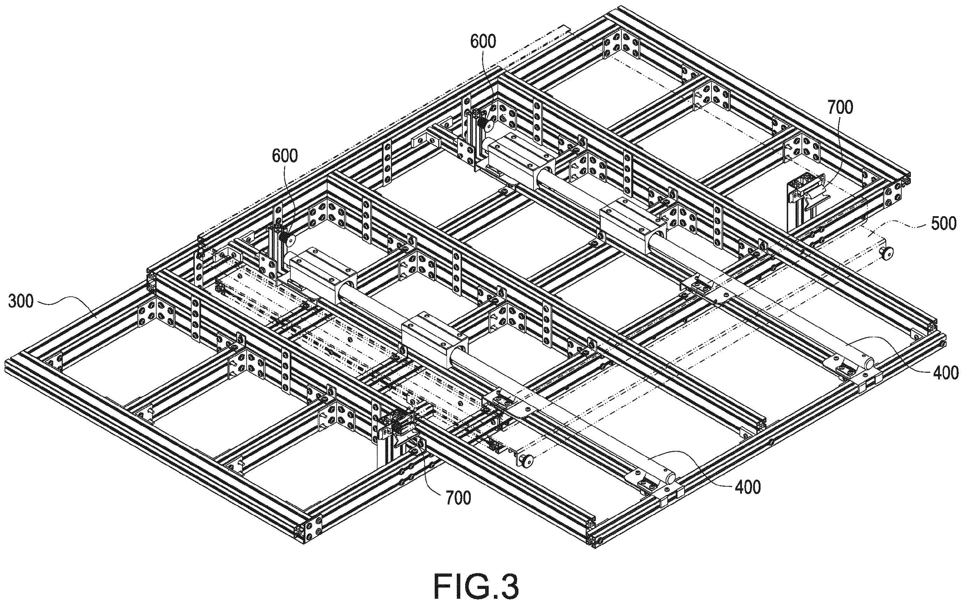

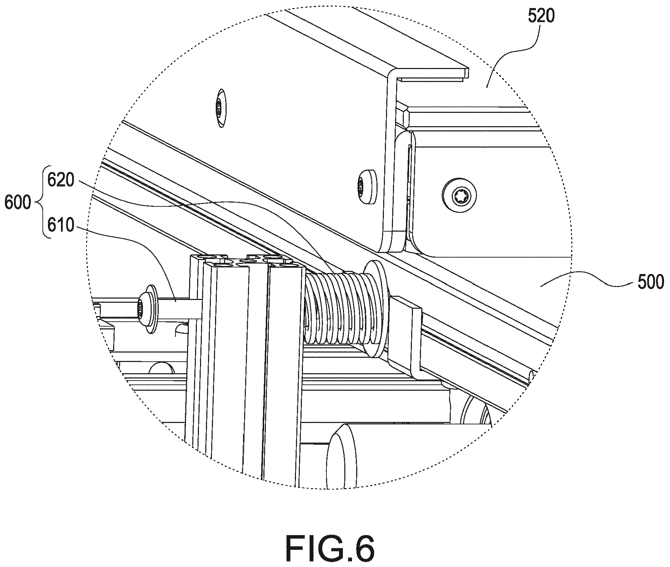

According to Figs. 3 to 6, the fixing assembly 600 is arranged on the lifting platform 300, the fixing assembly 600 is arranged corresponding to an end of the horizontal sliding rail 400 far from the opening 102, and the fixing assembly 600 presses the forming platform 500 toward the opening 102. Specifically, the fixing assembly 600 includes a pushing rod 610 and an elastic member 620, a part of the lifting platform 300 is preferably penetrated by the pushing rod 610 parallel with the horizontal sliding rail 400, and the pushing rod 610 is thereby capable of moving along a longitudinal direction thereof and parallel with the horizontal sliding rail 400. The elastic member 620 is preferably a cylindrical spring, the pushing rod 610 is sleeved by the elastic member 620, and two ends of the elastic member 620 respectively press the lifting platform 300 and the pushing rod 610, and the pushing rod 610 is thereby pushed to move toward the opening 102.

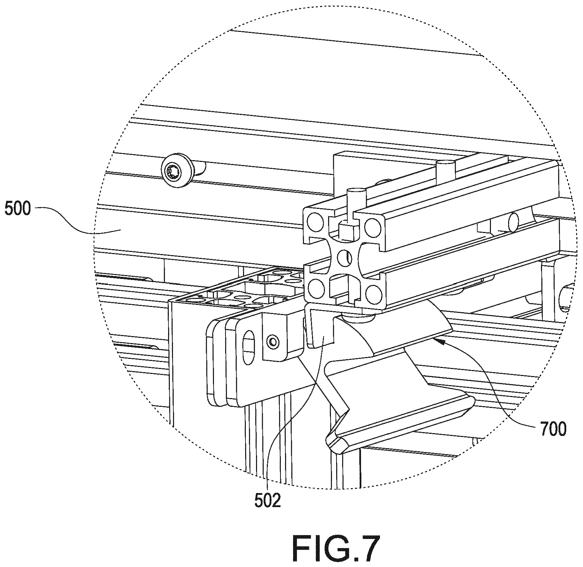

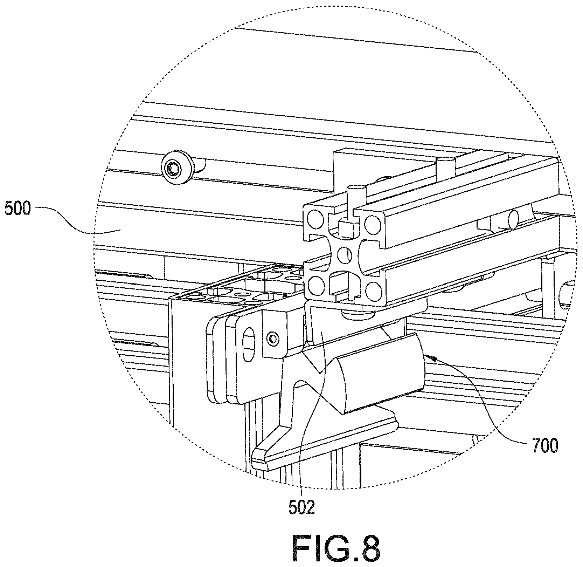

According to Figs. 3 to 5 and 7 to 8, the position latch 700 is arranged on the lifting platform 300, the position latch 700 latches the forming platform 500 and prevents the forming platform 500 from moving toward the opening 102. Specifically, the position latch 700 is pivoted to the lifting platform 300, and latches and fixes the forming platform 500 by a push force produced by the fixing assembly 600. A reset spring (not shown in Figs.) could be optionally arranged on the position latch 700 and the position latch 700 is thereby pivoted to latch and fix the forming platform 500. The forming platform 500 is fixed on the lifting platform 300 by the fixing assembly 600 and the position latch 700, and the forming platform 500 is thereby positioned at a working position for printing the model.

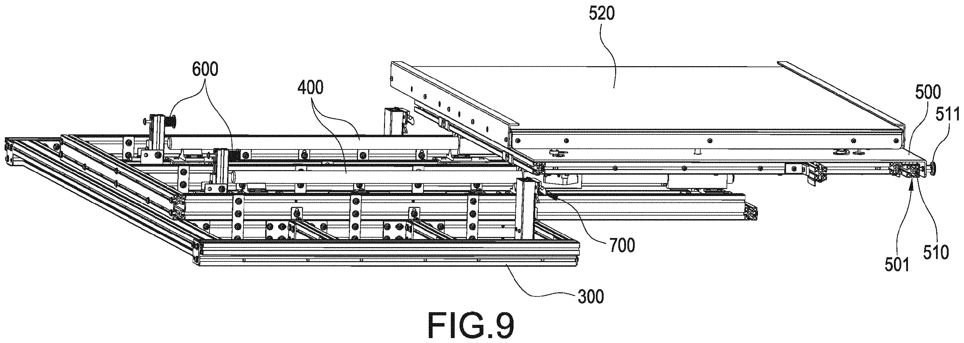

According to Figs. 9 to 11, at least one bracket 510 is arranged on a bottom surface of the forming platform 500. When the forming platform 500 is moved out of the casing 100, the forming platform 500 is supported by the bracket 510 at outside of the casing 100. According to the present embodiment, a couple of rod brackets 510 opposite to each other are preferably arranged on the bottom surface of the forming platform 500 for supporting two sides of the forming platform 500. However, the number and type of the bracket 510 should not be limited to the embodiment. One end of each bracket 510 (according to the present embodiment, an upper end of the bracket 510 is referred when the bracket 510 downward expands) is pivoted to the bottom surface of the forming platform 500 and the respective brackets 510 are swingable along a pivoted end thereof, and thereby folded to the bottom surface of the forming platform 500. The forming platform 500 is penetrated by a locking pin 511. When the bracket 510 is downward swung and expanded, the forming platform 500 and the bracket 510 are penetrated by the locking pin 511 and the bracket 510 is thereby fixed at an expanded position. A groove 501 for accommodating the bracket 510 is preferably defined on the bottom surface of the forming platform 500, the bracket 510 could be pivoted in the groove 501, and the bracket 510 is upward swingable to be folded into the groove 501. A magnetic member 512 is arranged on a lateral surface of the bracket 510. When the bracket 510 is folded to the forming platform 500, the magnetic member 512 could be magnetically attached on the forming platform 500, and the bracket 510 is thereby attached on the bottom surface of the forming platform 500 and fixed at a folded position. According to the present disclosure, the magnetic member 512 is preferably magnetically attached on an internal surface of the groove 501 and the bracket 510 is thereby fixed and accommodated in the groove 501.

The bracket 510 according to the present disclosure should not be limited to the aforementioned embodiment. For example, each bracket 510 could be a serially assembled structure of multiple segments, and a length of the bracket 510 therefore could be adjusted corresponding to a distance between the bottom surface of the forming platform 500 and a supporting point (e.g. the ground or a table) thereunder supported by the other end of the bracket 510 (according to the present embodiment, a lower end of the bracket 510 is referred when the bracket 510 downward expands). Furthermore, a wheel (not shown in Figs.) for ratable contacting could be selectively further arranged on an end of the bracket 510 supporting on the supporting point (according to the present embodiment, the lower end of the bracket 510 is referred when the bracket 510 downward expands).

According to the embodiment of the present disclosure shown in Figs. 4 to 11, horizontal sliding rails 400 are arranged on the lifting platform 300, the forming platform 500 on the lifting platform 300 is laterally moveable along the horizontal sliding rail 400. Therefore, the forming platform 500 could be moved out of the casing 100 through the opening 102 via the horizontal sliding rail 400 and it is convenient for a user to detach the model from the forming platform 500. When the forming platform 500 is pushed into the casing 100 and contacted with the fixing assembly 600, the user could press the forming platform 500 against the fixing assembly 600 to further move the forming platform 500 into the casing 100. When a latched point 502 on the forming platform 500 is moved to arrive the corresponding position latch 700, the position latch 700 could be thereby pushed away, and the corresponding latched point 502 on the forming platform 500 is allowed to move bypass the position latch 700. When the corresponding latched point 502 on the forming platform 500 is moved through the position latch 700, the position latch 700 could be pushed to rotate and further latch the forming platform 500. The position latch 700 could be pushed manually by a user or pushed by a reset spring, the scope of the present disclosure should not be limited to the embodiment.

## Claims

1. A 3D printing device comprising:
a casing (100), a forming chamber (101) being defined in the casing (100), an opening (102), which being formed on a side of the casing (100), communicated with the forming chamber (101);
a lifting platform (300) accommodated in the casing (100);
a horizontal sliding rail (400) arranged on the lifting platform (300) and capable of being extended toward the opening (102); and
a forming platform (500) arranged on the horizontal sliding rail (400), horizontally movable along the horizontal sliding rail (400), and being capable of moving out of the casing (100) through the opening (102).

2. The 3D printing device according to claim 1, wherein a bracket (510) is arranged on a bottom surface of the forming platform (500), and when the forming platform (500) is moved out of the casing (100), the bracket (510) is located outside the casing (100) to support the forming platform (500).

3. The 3D printing device according to claim 2, wherein one end of the bracket (510) is pivotally connected to the bottom surface of the forming platform (500) and capable of being folded onto the bottom surface of the forming platform (500).

4. The 3D printing device according to claim 2, wherein the bracket (510) is a combined structure of serial connected multiple segments, and a length of the bracket (510) is thereby adjustable according to a point supported by the bracket (510).

5. The 3D printing device according to claim 2, wherein a wheel is arranged on one end of the bracket (510) for ratable contacting.

6. The 3D printing device according to claim 3, wherein a groove (501) for containing the bracket (510) is defined on the bottom surface of the forming platform (500).

7. The 3D printing device according to claim 3, wherein the forming platform (500) is penetrated by a locking pin (511), when the bracket (510) is expanded, the forming platform (500) and the bracket (510) is penetrated by the locking pin (511) and the bracket (510) is thereby positioned at an expanded position.

8. The 3D printing device according to claim 3, wherein a magnetic member (512) is arranged on the bracket (510), when the bracket (510) is folded to the forming platform (500), the magnetic member (512) magnetically attaches the forming platform (500) and the bracket (510) is thereby positioned at a folded position.

9. The 3D printing device according to claim 1, wherein a vertical rail (200) is arranged in the casing (100), and the lifting platform (300) is arranged on the vertical rail (200) and up-down movable along the vertical rail (200).

10. The 3D printing device according to claim 9, wherein when the lifting platform (300) is located at a lower end of the vertical rail (200), the forming platform (500) is aligned to an area enclosed by the opening (102).

11. The 3D printing device according to claim 1, further comprising a fixing assembly (600) and a position latch (700), the fixing assembly (600) is arranged on the lifting platform (300), the fixing assembly (600) is arranged corresponding to an end of the horizontal sliding rail (400) far from the opening (102) and the forming platform (500) is pressed thereby toward the opening (102), the position latch (700) is arranged on the lifting platform (300), the position latch (700) latches the forming platform (500) and prevents the forming platform (500) from moving toward the opening (102).

12. The 3D printing device according to claim 11, wherein the fixing assembly (600) comprises a pushing rod (610) pressing on the forming platform (500) and an elastic member (620) driving the pushing rod (610).

13. The 3D printing device according to claim 11, wherein the position latch (700) is pivoted on the lifting platform (300), and a reset spring is arranged on the position latch (700) for driving the position latch (700) to pivot and further latch the forming platform (500).
